Europäisches Patentamt

European Patent Office

Office européen des brevets

(11) Veröffentlichungsnummer: **0 046 869**
**B1**

## EUROPÄISCHE PATENTSCHRIFT

(45) Veröffentlichungstag der Patentschrift:
10.10.84

(21) Anmeldenummer: 81105762.9

(22) Anmeldetag: 22.07.81

(51) Int. Cl.³: **F 16 C 3/02**

(54) **Anschluss zur Übertragung von Drehmomenten in torsionsweiche Rohre.**

(30) Priorität: 28.08.80 DE 3032370

(43) Veröffentlichungstag der Anmeldung:
10.03.82 Patentblatt 82/10

(45) Bekanntmachung des Hinweises auf die Patenterteilung:
10.10.84 Patentblatt 84/41

(84) Benannte Vertragsstaaten:
CH DE FR GB IT LI SE

(56) Entgegenhaltungen:
EP - A - 0 009 007
DE - A - 2 756 969
FR - A - 2 356 048
FR - A - 2 421 060
US - A - 3 638 979

(73) Patentinhaber: ROBERT BOSCH GMBH, Postfach 50,
D-7000 Stuttgart 1 (DE)

(72) Erfinder: Aichele, Wilfried, Dr., Dipl.-Chem.,
Sallerstrasse 33, D-7050 Waiblingen (DE)
Erfinder: Baur, Peter, Dr., Dipl.-Ing.,
Ferdinand-Hanauer-Strasse 84, D-7000 Stuttgart 50 (DE)

## Beschreibung

### Stand der Technik

Die Erfindung geht aus von einem Anschluß zur Übertragung von Drehmomenten nach der Gattung des Hauptanspruchs. Antriebswellen dienen innerhalb eines bestimmten Drehzahlbereichs zur Übertragung von Drehmomenten über eine vorgegebene Strecke. Um Schäden am gesamten Kraftübertragungssystem zu vermeiden, muß die maximal zulässige Drehzahl bei häufigem Wechsel deutlich unterhalb der kritischen Drehzahl liegen. Diese steigt bei vorgegebenem Außen- und Innendurchmesser der Welle mit abnehmender Länge und zunehmendem Quotienten aus Elastizitätsmodul des Materials in Achsrichtung und spezifischem Gewicht.

Liegt bei vorgegebener Gesamtlänge einer herkömmlichen Stahl- oder Aluminimwelle die kritische Drehzahl nicht ausreichend hoch, so läßt sie sich durch eine entsprechende Anzahl von Zwischenlagern erhöhen. Eine gewichtsgünstigere Lösung jedoch bietet der Einsatz von Rohrmaterialien mit einem höheren Verhältnis von Elastizitätsmodul in Achsrichtung und spezifischem Gewicht, wie z. B. Verbundwerkstoffe aus hochsteifen Fasern in einer Kunstharzmatrix. Rohre aus diesen Materialien sind jedoch in einigen Fällen im Vergleich zu Stahl oder Aluminium torsionsweich und besitzen einen niedrigen Elastizitätsmodul in Umgangsrichtung (z. B. EP-A-0 00 9007).

Werden über geeignete Anschlußstücke hohe, jedoch für die Rohrdimensionen noch zulässige Drehmomente übertragen, so sind zur Vermeidung des Versagens an den Verbindungsstellen besondere Maßnahmen zu treffen. So wurden bisher bei einer Verklebung zur Vermeidung von Spannungsspitzen im Kleber und bei der Drehmomentübertragung über Bolzen oder Schrauben zur Verringerung der Lochleibung im Rohr entweder der Durchmesser und/oder die Wandstärke des Rohres erhöht. Dies hat jedoch den Nachteil, daß die Wandstärke über die Länge des Rohres variiert werden muß und somit ein kontinuierlicher Herstellungsprozeß entfällt.

Aus der DE-A-27 56 969 ist ein Verfahren zum Verbinden einer rohrförmigen Welle mit einem Endverbindungsstück bekannt, bei dem das Endverbindungsstück in dem Eingriffsbereich mit zwei konzentrischen zylindrischen Wänden versehen ist, die eine ringförmige Ausnehmung zur Aufnahme der rohrförmigen Welle bilden. Die rohrförmige Welle besteht aus einem kohlenstoffaserverstärkten Epoxidharz und wird mittels eines Klebers in der ringförmigen Ausnehmung befestigt. Aus der US-A-3 638 979 ist ein ähnliches System bekannt, bei dem die beiden Teile durch eine elastomere Schicht miteinander verbunden sind. Insbesondere bei den Verklebungen, aber in geringerem Maße auch noch bei den Elastomer-Verbindungen, treten am rohrseitigen Ende der Verbindung Schubspannungsspitzen auf, die zu einer Verkürzung der Lebensdauer der Verbindungen führt.

### Vorteile der Erfindung

Der erfindungsgemäße Anschluß mit den kennzeichnenden Merkmalen des Hauptanspruchs hat demgegenüber den Vorteil, daß Spannungsspitzen in Achsrichtung in der Klebstoff- oder Gummifuge vermieden und dadurch die Haltbarkeit der Verbindung erhöht wird.

Durch die in den Unteransprüchen aufgeführten Maßnahmen ist eine vorteilhafte Weiterbildung und Verbesserung des im Hauptanspruch angegebenen Anschlusses möglich. Besonders vorteilhaft ist es, wenn die Dicke der Klebe- oder Gummifuge zum Anschlußrohr hin gemäß Funktion nach Anspruch 2 zunimmt.

### Zeichnung

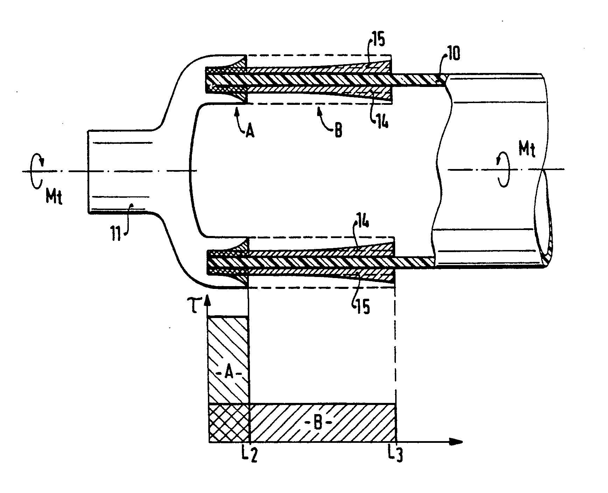

Ausführungsbeispiele der Erfindung sind in der Zeichnung dargestellt und in der nachfolgenden Beschreibung näher erläutert. Die Figur zeigt zwei Ausführungsformen mit der axial veränderlichen Schichtdicke des Klebers bzw. des Gummis.

### Beschreibung der Erfindung

Bei der Gestaltung einer Krafteinleitung, insbesondere eine Drehmonenteinleitung in schubweichen Rohren z. B. aus faserverstärkten Kunststoffen (Faserverbundwerkstoffen) kommt als Verbindungstechnik zwischen Flansch und Rohr nur Kleben, Schrauben oder Nieten in Betracht.

Bei diesen Rohren läßt sich durch Kombination von Faserlagen, die unter einem Winkel von etwa ±45° zur Rohrachse orientiert sind, und von annähernd achsparallelen Faserlagen die gewünschten Torsions- und Biegesteifigkeit bzw. Schub- und Biegefestigkeit in einem weiten Bereich variieren. Die höchste Biegesteifigkeit und damit die höchste kritische Drehzahl erhält man, wenn alle Faserlagen nur einen kleinen Winkel mit der Rohrachse einschließen, wie z. B. im EP-A-0 009 007 beschrieben ist. Während bei einer solchen Ausführung das torsionsweiche Rohr selbst als drehelastisches Glied wirkt, versucht man bei Stahl- oder Aluminiumwellen in einigen Fällen dieses elastische Verhalten durch Einleitung des Drehmoments über Hülsengummifedern mit relativ dicker Gummihülse (ca. 10-25 mm) zu erreichen.

Wellen aus solchen leichten Faserverbundwerkstoffen (spez. Gewicht ca. 1,4-2,0 g/cm$^3$) stellen im Vergleich zu Stahl- oder Aluminiumwellen eine Gewichtseinsparung dar, besonders, wenn durch ihren Einsatz zusätzlich Zwischenlager und/oder dickwandige Hülsengummifedern überflüssig werden. Sie sind daher vor allem im Fahrzeugbau von Interesse.

Probleme bei torsionsweichen Wellen, die z. B. aus Faserverbundwerkstoffen bestehen können, liegen in der Verbindungstechnik mit Anschlußstücken zur Drehmomenteinleitung. Bisher wurde die Verbindung durch Einwickeln der Anschlußstücke bei der Rohrherstellung durch Einbringen von metallischen Nieten oder Bolzen oder durch Einkleben mit konstanter Dikke der Klebefuge hergestellt.

Kleben: Um elastisches Beulen des Rohres unter Torsionsbeanspruchung innerhalb der Einklebelänge und damit eine Schälbeanspruchung des Klebers zu vermeiden, ist es notwendig, dünnwandige Rohre innen und außen im Einklebungsbereich zu fassen. Dies kann durch einen ein- bzw. aufgeklebten Metallring geschehen. Vorteilhaft ist jedoch auch eine Ausführung, bei welcher das Drehmoment sowohl von innen als auch von außen in das Rohr eingeleitet wird. Das schubweiche Kunststoffrohr 10 wird vom Flansch 11 am Innen- und Außendurchmesser über eine bestimmte Länge überlappt (siehe DE-A-2 756 969 und US-A-3 638 979).

Wie oben bereits erwähnt, treten bei dieser Art der Verbindung, vor allem bei Verklebungen, aber auch bei Elastomerzwischenschichten, wenn diese nicht dick genug sind, Schubspannungsspitzen auf, die zu einer allmählichen Zerstörung der Verbindung führen.

Man erreicht jedoch erfindungsgemäß einen Abbau der Spannungsspitzen durch Variation der Dicke der Klebefuge 14, 15 über die Einklebelänge L.

Unter der Voraussetzung eines linear-elastischen Verhaltens von Kleber und Rohr läßt sich mit der Bedingung einer konstanten Schubspannung im Kleber die näherungsweise Ausgestaltung der Fugendicke nach

$$d(1) = d(0) + \frac{2\pi r^3 G_K}{I_p \cdot G_R} \cdot I^2$$

ableiten, wobei die Klebefugendicke rohrseitig hin zunehmen muß. Hierbei bedeutet

d(I) die Fugendicke an einer beliebigen Länge 1 der Überlappung,

d(O) die frei wählbare Dicke der Klebefuge am flanschseitigen Ende der Überlappung,

$G_K$ Schubmodul des Klebers,

$G_R$ Schubmodul des Rohres,

$J_p$ polares Trägheitsmoment des Rohres,

r Abstand der Klebeschicht von der Rohrmitte.

Anstelle einer Parabelfunktion ließe sich jedoch auch eine geeignete Hyperbelfunktion verwenden.

In der Figur sind zwei Ausführungsbeispiele A und B mit verschiedenen Einspannlängen L2 und L3 für ein und dasselbe schubweiche Rohr 10 dargestellt, wobei die Klebefugedicke über die Einspannlänge nach Art einer Parabelfunktion in Achsrichtung variiert.

Die Ausführung A gilt für den schubsteiferen, die Ausführung B für den schubweicheren Kleber.

Bedingt durch die in beiden Fällen gleich angenommene minimale und maximale Dicke der Fuge resultiert bei gleichem Drehmoment im Fall A eine geringere Überlappungslänge L2 und somit eine höhere Schubspannung in der Fuge. Welcher der beiden Kleber (Ausführung A oder B) ein höheres Drehmoment überträgt, hängt näherungsweise von der Größe des Produktes aus der jeweils zulässigen Schubspannung und der Überlappungslänge ab.

Ein flacherer Anstieg der Parabel entsprechend der Ausführung B ergibt einen niedrigeren und gleichmäßigen Schubspannungsverlauf, wie in der Figur im Schubspannungsdiagramm dargestellt. Für einen flachen Parabelverlauf entsprechend Ausführung B ist ein Werkstoff mit einem kleinen Schubmodul notwendig. Hierfür eignet sich zur Drehmomentübertragung in der Fuge insbesondere Gummi mit einem Schubmodul zwischen 0,5 und 25 N/mm².

Die dadurch nur allmähliche Zunahme der Fugendicke in Achsrichtung (Ausführung B), welche zur Ausbildung einer konstanten Schubspannung notwendig ist, bedingt bei vergleichbarer minimaler und maximaler Schichtdicke eine derart große Überlappungslänge, daß die gegenüber den meisten Klebern geringere zulässige Schubspannung des Gummis trotzdem ausreicht und sogar überkompensiert wird.

Zur Erhöhung der Festigkeit können Nieten, Bolzen oder Schrauben in radialer Richtung angebracht werden, die die Torsionssteifigkeit der erfindungsgemäßen Verbindung erhöhen. Dabei muß die Nachgiebigkeit der Bolzen usw. quer zur Achsrichtung der geringen Steifigkeit des torsionsweichen Verbundwerkstoffrohres in Umfangsrichtung angepaßt sein, um eine Zerstörung des Rohres, ausgehend von den Lochrändern, zu vermeiden. Da gleichzeitig eine hohe Scherfestigkeit der Bolzen usw. notwendig ist, eignen sich für diesen Zweck erfindungsgemäß vorwiegend Faserverbundwerkstoffe mit axialer Faserorientierung (GFK-Stifte).

Besonders vorteilhaft ist auch die Kombination des Einklebens oder Einvulkanisierens des torsionsweichen Rohres 10 in den Flansch 11 mit den zusätzlich in radialer Richtung angebrachten Bolzen, Nieten oder Schrauben aus Faserverbundwerkstoffen.

## Patentansprüche

1. Anschluß zur Übertragung von Drehmomenten, insbesondere bei Antriebswellen, mit einem Anschlußflansch (11) zur Ein- oder Ableitung des Drehmoments und einem Anschlußrohr (10), die einander axial überlappen, wobei der Anschlußflansch (11) das Anschlußrohr (10) aus einem schubweichen Faserverbundwerkstoff am Innen- und/oder Außendurchmesser des Anschlußrohrs (10) überlappt und die Verbindung zwischen Anschlußrohr (10) und Anschlußflansch (11) über eine Klebeverbindung und/oder eine Gummischicht erfolgt, dadurch gekennzeichnet, daß die Verbindung zwischen schubweichem Rohr (10) und Anschlußflansch (11) über eine Gummi- und/ oder eine Klebeverbindung mit in Achsrichtung variabler Schichtdicke erfolgt derart, daß über die gesamte Länge der Gummi- bzw. Klebstoffschicht eine konstante Schubspannung auftritt.

2. Anschluß nach Anspruch 1, dadurch gekennzeichnet, daß die Klebe- bzw. Gummifuge nach folgender Funktion rohrseitig hin zunimmt:

$$d\,(l) = d\,(0) + \frac{2\,\pi\,r^3\,G_K}{I_p \cdot G_R} \cdot l^2 \,.$$

Hierbei bedeutet:

d(k) die Fugendicke an einer beliebigen Länge l der Überlappung,
d(O) die frei wählbare Dicke der Klebefuge am flanschseitigen Ende der Überlappung,
$G_K$ Schubmodul des Klebers,
$G_R$ Schubmodul des Rohres,
$J_p$ polares Trägheitsmoment des Rohres,
r Abstand der Klebeschicht von der Rohrmitte.

3. Anschluß nach Anspruch 1 oder 2, dadurch gekennzeichnet, daß die Gummischicht (14,15) durch Einvulkanisieren hergestellt wird.

## Claims

1. Connection for transmitting torques, particularly in drive shafts, which comprises a connection flange (11) for the input or output of the torque and a connection tube (10), the connection flange and the connection tube overlapping one another axially, while the connection flange (11) overlaps the connection tube (10), which is made of a composite fibre material soft against shear, on the inside and/or outside diameter of the connection tube (10) and the connection between the connection tube (10) and the connection flange (11) is made by means of an adhesive connection and/or a rubber layer, characterised in that the connection between the tube (10) which is soft against shear and the connection flange (11) is made by means of a rubber and/or adhesive connection whith a layer thickness variable in the axial direction, in such a manner that a constant shearing stress occurs over the entire length of the rubber or adhesive layer.

2. Connection according to Claim 1, characterised in that the adhesive or rubber joint increases towards the tube side in accordance with the following function:

$$d\,(l) = d\,(0) + \frac{2\,\pi\,r^3\,G_K}{I_p \cdot G_R} \cdot l^2$$

in which:

d(l) is the joint thickness on any length l of the overlap,
d(O) is the freely selectable thickness of the adhesive joint at the end of the overlap on the flange side,
$G_K$ is the shear modulus of the adhesive,
$G_R$ is the shear modulus of the tube,
$I_p$ is the polar moment of inertia of the tube,
r is the distance between the adhesive layer and the centre of the tube.

3. Connection according to Claim 1 or 2, characterised in that the rubber layer (14, 15) is made by incorporation by vulcanisation.

## Revendications

1. Raccord pour transmettre un couple de rotation à partir de pièces tubulaires non rigides, notamment dans le cas d'arbres d'entraînement en rotation avec une bride de jonction (11) pour l'introduction ou la dérivation du couple, et avec un tuyau de raccordement (10) qui se chevauchent axialement entre eux, auquel cas la bride de jonction (11) chevauche le tuyau de raccordement (10), constitué en un matériau composite à fibres cédant au fluage, sur son diamètre intérieur et/ou son diamètre extérieur, la liaison entre le tuyau (10) et la bride de jonction (11) étant réalisée par collage et/ou par l'intermediaire d'une couche d'adhésif, raccord caractérisé en ce que la liaison entre le tuyau (10) cédant au fluage et la bride de jonction (11) est réalisée par l'intermédiaire d'une couche de caoutchouc et/ou d'un collage, avec une épasseur de couche de joint variable en direction axiale, de telle sorte que, sur toute la longueur de la couche de caoutchouc ou d'adhésif, se produise une tension de fluage constante.

2. Raccord suivant la revendication 1, caractérisé en ce que le joint d'adhésif ou de caoutchouc présente une épaisseur qui croît in direction du tuyau selon la fonction suivante:

$$d\,(l) = d\,(0) + \frac{2\,\pi\,r^3\,G_K}{I_p \cdot G_R} \cdot l^2$$

formule dans laquelle:

d(1) est l'épaisseur du joint sur une longueur quelconque (2) du chevauchement,

d(O)est l'épaisseur librement choisie du joint de collage à l'extrémité côté bride du chevauchement,

$G_K$ est le module de fluage de l'adhésif,

$G_R$ est le module de fluage du tuyau,

$J_p$ est le moment d'inertie polaire du tuyau,

r est la distance entre la couche de collage et le milieu du tuyau.

3. Raccord suivant l'une des revendications 1 ou 2, caractérisé en ce que la couche de caoutchouc (14, 15) est réalisée par vulcanisation interne.